Europäisches Patentamt

European Patent Office

Office européen des brevets

(19)

(11) Publication number: **0 171 110**
**B1**

(12) EUROPEAN PATENT SPECIFICATION

(45) Date of publication of patent specification: **21.12.88**

(51) Int. Cl.⁴: **C 09 D 5/16,** C 09 D 3/82,
B 32 B 25/08

(21) Application number: **85201151.9**

(22) Date of filing: **09.07.85**

(54) **Polymeric antifouling compositions.**

(30) Priority: **13.07.84 GB 8417876**

(43) Date of publication of application:
**12.02.86 Bulletin 86/07**

(45) Publication of the grant of the patent:
**21.12.88 Bulletin 88/51**

(84) Designated Contracting States:
**BE DE FR GB IT NL**

(56) References cited:
**EP-A-0 063 388**
**EP-A-0 089 071**
**US-A-4 035 546**
**US-A-4 177 301**

**CHEMICAL ABSTRACTS, vol. 90, no. 14, April
1979, page 107, no. 105785w, Columbus, Ohio,
US; & JP - A - 78 137 231 (CHUGOKU MARINE
PAINTS LTD.) 30-11-1978**

(73) Proprietor: **SHELL INTERNATIONALE
RESEARCH MAATSCHAPPIJ B.V.**
**Carel van Bylandtlaan 30**
**NL-2596 HR Den Haag (NL)**

(72) Inventor: **Miller, Douglas**
**c/o P.O. Box 1,**
**Chester Cheshire (GB)**
Inventor: **Shone, Edward Brian**
**c/o P.O. Box 1,**
**Chester Cheshire (GB)**
Inventor: **Riches, Kenneth Maurice**
**c/o P.O. Box 1,**
**Chester Cheshire (GB)**

(74) Representative: **Aalbers, Onno et al**
**P.O. Box 302**
**NL-2501 CH The Hague (NL)**

Courier Press, Leamington Spa, England.

## Description

The present invention relates to polymeric antifouling compositions as well as to a method for the manufacture of coated structures using the polymeric antifouling compositions according to the present invention and to structures thus coated.

The prevention of structures against fouling by various organisms such as grasses, algae, barnacles, tube worms, sepula, oysters, ascidia, bryozoa and the like has gained in importance in the last decade because of the soaring development of, in particular, off-shore facilities.

The early conventional antifouling coatings were based on paints containing poisonous substances such as copper, tin, mercury, arsenic and lead and derivatives thereof. They are now becoming obsolete because of the limited useful lifetime and the ecological problems connected therewith. They are being replaced by coatings based on vulcanizable silicone rubbers, preferably room-temperature-vulcanizable silicone rubbers as described in British Patent Specification 1,307,001, which basically prevent organisms from adhering to structures coated with such rubbers.

In order to improve the anti-fouling properties of coatings based on silicone rubbers it has already been suggested to incorporate into the antifouling coatings certain fluids which are released very slowly through the silicone rubber so that the build-up undesired organisms is even more retarded. Suitable fluids comprise silicone oils as described in British Patent Specification 1,470,465 and low molecular weight polyolefins, polyesters, polyisocyanates, polyurethanes, polyepoxides, lubricating oils as well as plasticizers as described in British Patent Specification 1,581,727.

Although the silicone rubbers, and in particular the room temperature vulcanizable silicone rubbers have excellent water-repelling properties, they are nevertheless rather porous so that water may pass through their structure. It would therefore be advantageous to have a substantially water-impermeable layer present within the antifouling composition to prevent access of water to the body underlying the antifouling coating. In order to cope with the tendency to use high-built layers of silicone-rubbers on fixed structures—which layers can be suitably prefabricated—it becomes also of great importance to secure an optimum bonding between the silicone-rubber layer and the substantially water-impermeable layer whilst using a very small amount of bonding agent which facilitates handling during manufacture, storage and transport.

Surprisingly, it has now been found that high-built layers of a silicone-rubber containing an exuding liquid can be secured to a layer of substantially water-impermeable material when use is made of a particular bonding agent which is applied in the form of a very thin film.

The present invention thus relates to a polymeric antifouling composition comprising a high-built layer containing a vulcanised silicone rubber and an exuding liquid and a substantially water-impermeable layer, which layers are joined together through a bonding film of a silicone ester of (meth)acrylic acid, and which composition contains at least 60% by volume of the high-built layer.

Vulcanized silicone rubbers to be used in the polymeric antifouling compositions according to the present invention can be prepared from silicone gums, which are highly linear high-molecular weight organosiloxane polymers consisting essentially of alternating atoms of silicone and oxygen as a polymeric backbone with organic substituents attached to the silicon atoms of the polymeric backbone. Vulcanized silicone rubber may be prepared by heat curing with various catalysts (such as peroxides) or by radiation curing of a silicone gum which, e.g., substantially consists of a polydisubstituted siloxane. All or the predominant part of the organic substituents may be methyl units, the remainder being vinyl- and/or phenyl units.

Vulcanized silicone rubbers may also be prepared by vulcanizing at ambient temperature silicone gums which contain silanol end groups (the so-called RTV gums). All or the predominant part of the substituents in the RTV gums may be hydrocarbyl groups, (in particular methyl groups), the remainder may be ethyl-, phenyl- or substituted hydrocarbyl groups, such as chlorophenyl-, fluoropropyl- or cyanoethyl groups. Preference is given to the use of silicone rubbers which are room-temperature vulcanizable RTV gums in which the organic substituents contain or consist of silicone-free segments which are constituted of recurrent units (in particular polymeric segments) as described in European Patent Publication 0032597; they are very suitable to be vulcanized to silicone rubbers to form part of the polymeric antifouling composition.

The polymeric segments are preferably linked to the silicone atoms via alkylene or alkylidene groups, and very suitably are derived from monomers containing ethylenic unsaturation. The said monomers may, e.g., consist at least partly of unsaturated acids or derivatives thereof (such as esters, e.g. esters of acrylic and/or methacrylic acid and monovalent alcohols) and/or include styrene. Polymeric segments based on copolymers of styrene and butylacrylate are very suitable.

The preparation of vulcanized silicone rubbers from silicone gums at ambient temperatures may be carried out by two different methods, viz. the one-pack RTV-system and the two-pack RTV-system as described in the British Patent Specification 1,581,727.

The polymeric antifouling compositions according to the present invention contain a fluid organic compound which is part of the high-built layer in order to optimize the period in which the coating according to the invention is not fouled.

Fluid organic compounds which act as exuding liquids include compounds having a boiling point at atmospheric pressure of at least 250°C. Examples of such liquids are silicone fluids, which consist of poly-dihydrocarbyl siloxanes (of which the hydrocarbyl groups may be substituted with hetero-atoms). The hydrocarbyl groups may be alkyl groups (in particular methyl groups) or all or part thereof may be aryl groups (in particular phenyl groups). A further group of fluid organic compounds comprises low molecular weight polyolefins, such as ethylene/propylene copolymers, and in particular polyisobutene with a molecular weight up to about 5,000, e.g. from 300—500. Other types of fluid organic compounds which can be applied comprise low molecular weight polydienes, polyesters, polyisocyanates, polyepoxides, lubricating oils such as technical white oils and plasticizers (e.g. esters of fatty acids, which may be substituted with hetero atoms or- groups, esters of phosphoric acid and halogenated hydrocarbons).

Preference is given to the use of polyolefins, in particular polybutene since the presence of such materials substantially improves the tear strength, the tensile strength, the elongation at break and the shore hardness of the polymeric antifouling compositions containing them.

The amounts of fluid organic compounds present may vary between wide limits. Amounts from 0.1 to 100 pbw per 100 pbw of vulcanized silicone rubber are suitably applied, preference being given to the use of 10—50 pbw of fluid organic compound per 100 pbw of vulcanized silicone rubber.

The substantially water-impermeable layer suitably contains or consists of polyvinylchloride, an epoxy resin or a polyurethane. Preference is given to the use of polyvinylchloride as the material to form the water-impermeable layer. Since the vulcanized silicone rubber layer is a high-built layer, it is possible to substantially reduce the thickness of the water-impermeable layer, e.g. to well below 1 mm without unduly reducing the handleability of the total composition. Water-impermeable layers between 50 μ and 700 μ can be suitably applied, preferably being given to layers having a thickness between 200 μ and 600 μ.

As discussed hereinbefore, it is of great importance to have sufficient bonding strength between the high-built layer and the substantially water-impermeable layer since the life expectancy of the polymeric antifouling composition will be largely governed by this feature. The fact that silicone acrylate-type materials exhibit excellent bonding properties has solved the problem of obtaining a very thin but also a very strong bond between the two base layers of the polymeric antifouling compositions according to the present invention. It has been found that such silicone-acrylate-type materials can be applied in the form of a film, i.e. as an ultrathin layer which may even be monomolecular.

Good results can be obtained using lower alkyl silicone esters of acrylic acid, e.g. $C_{1-6}$ alkyl silicone esters, many of which are commercially available as acrylate primers. In significant contrast, attempts to bond the high-built layer and the substantially water-impermeable layer by means of an elastomeric bonding agent (a solution of silicone rubber in toluene) failed to give any appreciable bonding strength.

The high-built layers in the polymeric antifouling compositions according to the present invention typically have a thickness between 3 mm and 10 mm. They form at least 60% by volume and preferably at least 80% by volume, of the total volume of the compositions.

It is possible to include one or more fluorescent pigments in the high-built layers, preferably in the form of one or more specific characters, which render the polymeric antifouling compositions also suitable to serve as markers to identify individual areas of, in particular underwater parts of, marine structures such as ships, buoys, fuel tanks, floating and fixed offshore platforms and pipelines.

Fluorescent compounds are inorganic or organic compounds (in particular dyes) which convert onfalling light of a certain wave length (the exciting light) to light of a longer wave length which is emitted after a short period of time (e.g. less than $10^{-2}$ sec.). In general, the exciting light consists of ultraviolet light or visible light of the blue end of the spectrum, and the light emitted has wave lengths in the visible part of the spectrum. In the preferred cases the emitted light has the same hue as light reflected by the dye, because the reflected colour is thus reinforced with the emitter colour producing hues which appear extraordinarily bright to the eye. This effect is achieved by incorporating a suitable organic dye in the fluorescent pigment which is to be used in the polymeric antifouling compositions according to the invention. It is of advantage that the dye incorporated fluoresces under the influence of exciting light in the visible part of the spectrum (in other words: shows daylight fluorescence) because in that case by irradiation with electric torch light as used during working under water (e.g. by divers), the marked areas of the surface of the marine structures are clearly visible and identifiable.

Very suitably the pigments consist for the greater part of organic resins in which the dyes have been incorporated, in general in low concentrations (e.g. 1—5% w). Such pigments are commercially available. The choice of the pigment to be used will depend on the type of colour and intensity thereof which is desired under the prevailing circumstances at the underwater parts of the marine structure.

The amount of fluorescent pigments present in the polymeric antifouling compositions according to the invention may vary between wide limits. Amounts from 0.1 to 20 % w, on vulcanized silicone rubber are very suitable.

The characters to serve as (part(s) of the) markers are preferably made of the same silicone rubber as used in the polymeric antifouling compositions so that the total outer layer of the composition exhibits antifouling properties.

The compositions according to the present invention may be provided with an adhesive undercoat which is capable of securing the polymeric antifouling compositions to the desired location. Conventional adhesives such as certain polyurethanes and bitumen-based compounds such as bitumastic can be suitably applied. The outer surface of the conventional adhesive may be covered with self-adhesive tape which is released prior to application. The layer of conventional adhesive will generally have a thickness between 200 μ and 2 mm depending on the type of material used and the application envisaged.

The present invention also relates to a method for the manufacture of coated structures by using polymeric antifouling compositions according to the present invention and to structures thus coated. A suitable method for applying the polymeric antifouling compositions to the appropriate structures comprises cleaning the surface of the structure to be coated and optionally providing it with an anticorrosion coat and fixing the polymeric antifouling composition, which has been pre-made by means of conventional techniques such as casting, directly to an adhesive layer present on the surface or by releasing the self-adhesive tape from the pre-made polymeric antifouling composition provided with an adhesive undercoat and pressing it onto the surface to be protected. It is also possible, and preferred when existing underwater structures are to be protected, to use clamping bands to which the pre-made polymeric antifouling compositions which may contain one or several characters, are secured and to strap or wrap the clamping bands around the parts of the structures to be protected. Both onshore structures such as pipelines for power stations, structures used in fish farming and offshore structures can be coated with the polymeric antifouling compositions according to the present invention. The present non-toxic polymeric antifouling compositions are especially advantageous because of their extended life expectancy which is of prime importance in rather inaccessible environments.

Example 1

An intimate mixture was prepared by blending 150 parts by weight of a commercial organopolysiloxane which contained grafted polymeric segments based on styrene (about 20—25% W) and butylacrylate (about 30—40% W), 6 parts by weight of a catalyst consisting of a blend of an organic tin compound and an alkyl silicate, and 30 parts by weight of a polyisobutene having an average molecular weight of 350. The mixture thus prepared was attached to a layer of polyvinylchloride by means of 0.4 parts by weight of a silicone ester of acrylic acid bonding agent (commercially available under the code VP 9904 from Wacker Chemie, Munich, Germany) and the composition was allowed to cure at room temperature. The thickness of the final composition (in the form of a sheet) was about 7 mm and the volume of the silicone top coat amounted to about 90% of the total volume. The antifouling properties of the composition were tested by securing the composition to a panel by means of bitumastic. The antifouling performance of the composition was highly satisfactorily as was the bonding between the polyvinylchloride layer and the high-built silicon rubber top coat.

Example 2

The experiments described in Example 1 were repeated whilst incorporating 15 parts by weight of a commercial daylight fluorescent orange pigment in the top coat to be cured. The final product showed both a very good overall antifouling performance and very good visibility when illuminated.

Comparative Example

The preparation of the composition as described in Example 1 was repeated but using a solution of a curable rubber in toluene as a prospective elastomeric bonding agent. After curing at room temperature, the two layers could be easily torn apart by exerting slight manual force, which made the composition unsuitable for further processing/testing.

**Claims**

1. Polymeric antifouling composition comprising a high-built layer containing a vulcanized silicone rubber and an exuding liquid, and a substantially water-impermeable layer, characterised in that said layers are joined together through a bonding film of a silicone ester of (meth)acrylic acid, and which composition contains at least 60% by volume of the high-built layer.

2. Composition according to claim 1, wherein the high-built layer contains a room temperature vulcanized silicone rubber which rubber contains silicon-free segments which are constituted of recurrent units.

3. Composition according to claims 1 or 2, wherein the substantially water-impermeable layer comprises a layer of polyvinyl chloride or an epoxy resin.

4. Composition according to any one of claims 1—3, wherein the high-built layer comprises one or more characters consisting of a vulcanized silicone rubber and a fluorescent pigment.

5. Composition according to any one of claims 1—4, wherein the substantially water-impermeable layer is undercoated with a layer of a conventional adhesive which may be covered with a self-adhesive tape.

6. A method for the manufacture of a coated structure by coating at least part of the outer surface with a polymeric antifouling composition according to any one of claims 1—5.

7. A method according to claim 6, wherein at least part of the outer surface is coated with a polymeric antifouling composition according to any one of claims 1—6, characterised in that the polymeric composition is fixed on to the surface of the structure either by means of a conventional adhesive or by means of clamping bands.

8. A structure which has been coated at least partially with a composition according to any one of claims 1—5.

**Patentansprüche**

1. Polymere, die Verschmutzung und den Befall durch Organismen verhütende Zusammensetzung umfassend eine körperreiche Schicht, enthaltend einen vulkanisierten Silikonkautschuk und eine Ausschwitzflüssigkeit, und eine im wesentlichen wasserundurchlässige Schicht, dadurch gekennzeichnet, daß die genannten Schichten mittels eines Klebefilms aus einem Silikonester der (Meth)acrylsäure miteinander verbunden sind, und welche Zusammensetzung mindestens 60 Volumenprozent an der körperreichen Schicht enthält.

2. Zusammensetzung nach Anspruch 1, in welcher die körperreiche Schicht einen bei Raumtemperatur vulkanisierten Silikonkautschuk enthält, welcher Kautschuk silikonfreie Abschnitte aufweist, die aus Repetiereinheiten aufgebaut sind.

3. Zusammensetzung nach Anspruch 1 oder 2, in welcher die im wesentlichen wasserundurchlässige Schicht eine Schicht aus Polyvinylchlorid oder einem Epoxidharz umfaßt.

4. Zusammensetzung nach einem der Ansprüche 1 bis 3, in welcher die körperreiche Schicht eine oder mehrere Markierungszeichen(characters) umfaßt, welche aus einem vulkanisierten Silikonkautschuk und einem fluoreszierenden Pigment bestehen.

5. Zusammensetzung nach einem der Ansprüche 1 bis 4, in welcher die im wesentlichen wasserundurchlässige Schicht an der Unterseite mit einer Schicht eines herkömmlichen Klebemittels bedeckt ist, welche mit einem selbstklebenden Band bedeckt sein kann.

6. Ein Verfahren zur Herstellung einer beschichteten Struktur durch Beschichten mindestens eines Teils der äußeren Oberfläche mit einer polymeren, die Verschmutzung und den Befall durch Organismen verhütenden Zusammensetzung gemäß einem der Ansprüche 1 bis 5.

7. Ein Verfahren nach Anspruch 6, in welchem mindestens ein Teil der äußeren Oberfläche mit einer polymeren, die Verschmutzung und den Befall durch Organismen verhütenden Zusammensetzung nach einem der Ansprüche 1 bis 6 beschichtet wird, dadurch gekennzeichnet, daß die polymere Zusammensetzung entweder mittels eines herkömmlichen Klebstoffes oder mittels Zurrgurten(clamping bands) auf die Oberfläche der Struktur aufgebracht wird.

8. Eine Struktur, welche mindestens teilweise mit einer Zusammensetzung nach einem der Ansprüche 1 bis 5 beschichtet worden ist.

**Revendications**

1. Composition polymère contre la salissure comprenant une couche fortement charpentée contenant un caoutchouc aux silicones vulcanisé et un liquide exsudable et une couche substantiellement imperméable à l'eau, caractérisée en ce que ces couches sont reliées entre elles par un film de liaison d'un ester de silicone d'acide acrylique ou méthacrylique, la composition contenant au moins 60% en volume de la couche fortement charpentée.

2. Composition selon la revendication 1, dans laquelle la couche fortement charpentée contient un caoutchouc aux silicones vulcanisé à la température ambiante, ce caoutchouc contenant des segments exempts de silicium qui sont constitués de mailles.

3. Composition selon la revendication 1 ou 2, dans laquelle la couche substantiellement imperméable à l'eau comprend une couche de chlorure de polyvinyle ou une résine époxy.

4. Composition selon l'une quelconque des revendications 1—3, dans laquelle la couche fortement charpentée comprend un ou plusieurs caractères constitués d'un caoutchouc aux silicones vulcanisé et d'un pigment fluorescent.

5. Composition selon l'une quelconque des revendications 1—4, dans laquelle la couche substantiellement imperméable à l'eau comporte comme sous-couche une couche d'un adhésif classique qui peut être couverte d'un ruban auto-adhésif.

6. Un procédé pour la fabrication d'une structure revêtue en revêtant au moins une partie de la surface extérieure avec une composition polymère contre la salissure selon l'une quelconque des revendications 1—5.

7. Un procédé selon la revendication 6, dans lequel au moins une partie de la surface extérieure est revêtue d'une composition polymère contre la salissure selon l'une quelconque des revendications 1—6, caractérisé en ce que la composition polymère est fixée sur la surface de la structure soit au moyen d'un adhésif classique soit au moyen de bandes de serrage.

8. Une structure qui à été revêtue au moins partiellement d'une composition selon l'une quelconque des revendications 1—5.